# EUROPEAN PATENT APPLICATION

(11) **EP 4 651 457 A1**
(43) Date of publication of application: **19.11.2025**
(21) Application number: 24196392.5
(22) Date of filing: 26.08.2024
(51) Int. Cl.: H04L 41/0806, H04L 61/5007, H04L 61/5038, H04L 12/40, G06F 13/42

(54) **EFFICIENT ADDRESSING OF DETACHED I/O-MODULES AND I/O-BUS SEGMENTS**

(30) Priority: 14.05.2024 EP 24175574
(71) Applicant: Siemens Schweiz AG, 8047 Zürich (CH)
(72) Inventor: Kyburz, Beat, 8913 Ottenbach (CH)
(74) Representative: Siemens Patent Attorneys

(57) **Abstract**

The addressing of I/O-Modules (I/O) of a Building Automation System shall be simplified. Therefore, there is provided a method of automatically addressing a plurality of I/O-Modules (I/O) of an I/O-Module arrangement being connected to a controller (BAC), the I/O-Modules (I/O) being arranged serially in a first I/O-Bus segment (1) and at least a separate second I/O-Bus segment, each I/O-Bus segment (1, 2) including a branch connection unit (BCC, BCN) and at least one of the I/O-Modules (I/O), the branch connection units(BCC, BCN) of the first and second I/O-Bus segments (1, 2) are interconnected, the method includes the steps of providing pregiven topology data (engineered data) of the I/O-Module arrangement, the pregiven topology data includes for each I/O-Bus segment: a segment address and respective segment topology data, wherein the segment topology data includes an address of the controller or the respective branch connection unit and each I/O-Module (I/O) of the respective I/O-Bus segment, automatically discovering physical segment topology data (fingerprint) by the controller (BAC) in the first I/O-Bus segment (1) and by the respective branch connection module (BCC) in the second I/O-Bus segment (2) and automatically addressing all I/O-Modules with the respective segment address in accordance with the pregiven topology data, only if the physical segment topology data of each I/O-Bus segment (1, 2) corresponds to the respective segment topology data of the pregiven topology data.

## Description

The present invention relates to a method of automatically addressing a plurality of I/O-Modules of an I/O-Module arrangement being connected to a controller, the I/O-Modules being arranged serially in a first I/O-Bus segment a separate second I/O-Bus segment, each including a branch connection unit (herein also called branch connection module or BC-Module) and at least one of the I/O-Modules. Additionally, the present invention relates to a network, a control cabinet and a Building Automation System applying the said method.

*Independent of the grammatical term usage, individuals with male, female or other gender identities are included within the term.*

I/O-Modules (input/output modules or I/O module devices) are devices interfacing with the physical world and used to integrate peripheral devices such as sensors and actuators into a Building Automation System. Multiple I/O-Modules can be connected to one Building Automation Controller via an I/O-Bus.

Each I/O Module needs an unambiguous I/O-Module-Address which is used by the Building Automation Controller to address the I/O-Module via the I/O-Bus.

So far, the I/O-Module-Address was configured by the installer via a pluggable electromechanical address key. This addressing method is costly since an electromechanical address decoder was required per I/O-Module, and the installer had to bring along the right set of pluggable address keys. Spare address keys from the set are thrown away (waste).

Alternatively, the I/O-Module-Address can be configured via a commissioning tool, e.g., Mobile Phone and Mobile App. This procedure would require a connection such as Bluetooth, NFC, or USB between the I/O-Module and the commissioning tool. This solution requires extra hardware and makes the I/O-Module more expensive. Other solutions require e.g. pre-engineered serial number information, e.g. printed on the I/O-Module (e.g. QR-Code), or an automatical generation of an I/O-Module-Address and storing it in the terminal base of the I/O-Module.

The object of the present invention is to address a plurality of I/O-Modules more efficiently.

This object is solved by a method and a network according to the independent claims. Further preferable developments are defined in the subclaims.

Thus, there is provided a method of automatically addressing a plurality of I/O-Modules of an I/O-Module arrangement being connected to a controller. The I/O-Modules represent input/output modules which realize data interfaces for e.g. sensors and actuators of address building automation system. The I/O-Modules are arranged in a specific arrangement. Specially, the I/O-Modules are arranged serially in a first I/O-Bus segment and (at least) a separate second I/O-Bus segment. Specifically, the I/O-Modules may be arranged in several Single Pair Ethernet (SPE) lines one behind the other. The arrangement may include two or more of such segments (in the following the I/O-Bus segments are briefly called segments).

Each segment includes a branch connection unit and at least one of the I/O-Modules. The I/O-Modules and the branch connection unit can be connected among each other by a I/O-Bus.

The branch connection unit of the first and second segments are interconnected. For instance, the branch connection units are connected by a fast Ethernet link.

In one step of the inventive method pregiven topology data of the I/O-Module arrangement is provided. Such pregiven topology data represent e.g. an engineered I/O-Module arrangement. Thus, the pregiven topology data are engineered data showing the intended topology.

The pregiven topology data includes for each segment: a segment address and respective segment topology data. The segment address may be an increasing number for all segments connected to the controller. The segment topology data includes an address of the controller or the respective branch connection unit and each I/O-Module and optionally its Module Type of the respective segment. For instance, one segment comprises five I/O-Modules in series. If the segment address is "1", the I/O-Module addresses and pregiven topology data could be: 1.1 with Module Type A, 1.2 with Module Type B, 1.3 with Module Type C, 1.4 with Module Type A and 1.5. with Module Type C.

In a further step, physical segment topology data are automatically discovered by the controller (BAC) in the first segment and by the respective branch connection module in the second segment. This means that a branch connection unit automatically determines the topology data of the real I/O-Module arrangement. Thus, within each segment topology data are discovered, which represent the internal segment structure.

In a further step, all (physical) I/O-Modules are automatically addressed with the respective segment address in accordance with the pregiven topology data, only if the physical segment topology data of each segment corresponds to the respective segment topology data of the pregiven topology data. This means that in the case that the discovered physical segment topology data (fingerprint) is identical to the respective part of the pregiven topology data, the respective segment address can be gained from the pregiven topology data in order to address the physical segment or its modules (I/O-Modules and optionally the respective branch connection unit).

Advantageously, the segment addresses of the I/O-Module arrangement can be automatically gained and assigned to the discovered physical segments or branch connection modules.

In one embodiment, the segment topology data includes specifically for each of the I/O-Modules within the respective segment: a module address and a Module type information, wherein each module address represents a position of the corresponding module within the respective segment. Thus, the segment topology data includes at least an address and a Module type information of each I/O-Module. The module address may represent the position of an I/O-Module within the segment.

According to a further embodiment, the segment topology data as well as the pregiven topology data include distances of the I/O-Modules to the respective branch connection unit, and the step of automatically determining the physical segment topology data includes that the respective branch connection unit automatically measures the distances. For instance, the topology may comply with the 10BASE-T1S specification. With this technology it is possible to automatically measure the distances from a controller or a branch connection module to respective I/O-Modules of a segment. Thus, at least the addresses or positions of the I/O-Modules within one segment can be discovered automatically.

In a specific embodiment, the step of automatically measuring the distance includes a measurement of a response time to a signal. In other words, the distance between e.g. a controller and an I/O-Module can be discovered by transmitting a signal and measuring the response time of the signal. The distance can be deduced from the signal propagation time.

In a further embodiment the step of automatically addressing includes automatically addressing of the respective branch connection unit. Usually, the controller is arranged in the first segment and the I/O-Modules of the first segment obtain the segment address of the controller, e.g. "0". In this case, the branch connection unit of the first segment also obtains the segment address "0". The branch connection units of the second and further segments automatically obtain the respective segment address similar to the I/O-Modules if the fingerprints of engineered and discovered data match.

According to another embodiment, the pregiven segment topology data as well as the physical segment topology data include type information about each of the I/O-Modules, and the step of automatically determining the physical segment topology data includes that the respective branch connection unit automatically determines the type information of each I/O-Module in the respective segment. This means that the segment topology data include type information in addition to address or distance information about each of the I/O-Modules. In this case, the branch connection unit not only determines the address or distance of a respective I/O-Module but also the type of the I/O-Module. Thus, the fingerprint of a segment includes type information for each I/O-Module beside its simple address or position. The addresses together with the type information of the several I/O-Modules of a segment result in a typical fingerprint of the segment.

According to a further favourable embodiment, the pregiven segment topology data as well as the physical segment topology data include type information about the respective branch connection module. Each segment includes a controller and/or a branch connection unit. A segment can also comprise several branch connection units. A type information can be assigned to each controller or branch connection unit. Such type information of the controller and/or branch connection unit further increases the specificity of the fingerprint of a segment.

According to the present invention, there can also be provided a network including a plurality of I/O-Modules of an I/O-Module arrangement being connected to a controller, the I/O-Modules being arranged serially in a first I/O-Bus segment and (at least) a separate second I/O-Bus segment (line), each I/O-Bus segment including a branch connection unit and at least one of the I/O-Modules, the branch connection units of the first and second I/O-Bus segments are interconnected, wherein the controller is designed to perform one of the above method.

The advantages and variations described above in connection with the method also apply for the inventive network analogously. Respective method features can be regarded as functional features of the network.

According to another embodiment, each segment comprises an I/O-Bus on the basis of a Single Pair Ethernet datalink. Single Pair Ethernet (SPE) characterizes an Ethernet transmission via a pair of (copper) wires and enables simultaneous power supply to end devices in addition to data transmission via Ethernet.

In a further specific embodiment, the I/O-Bus is based on 10BASE-T1S topology. This 10BASE-T1S specification is defined in the standard IEEE 802.3. The 10BASE-T1S topology allows automatic distance measurement from a controller or a branch connection unit to an I/O-Module.

Furthermore, there may be provided a control cabinet housing a plurality of I/O-Modules and a controller designed to perform the above-described methods. Thus, automatic addressing of I/O-Modules can be performed within a control cabinet.

Additionally, there may be provided a Building Automation System comprising at least one network as described above. Specially, the Building Automation System may comprise a plurality of such (partial) networks and the automatic addressing of the I/O-Modules can be performed all over the Building Automation System.

Moreover, there may be provided a Building Automation System, wherein the I/O-Module arrangement is visualized on the basis of the automatically discovered physical segment topology data and the automatically addressed branch connection units. This means that the automatically discovered I/O-Module arrangement including branch connection units and preferably further including the controller and other modules of the network can be displayed on a screen, for example. It may also be beneficial to realize the pregiven topology data in parallel. Thus, the user can realize differences at once.

The present invention will now be described in more detail in connection with the attached drawings, showing in:
FIG 1 an I/O-Bus technology in a controller cabinet with multiple I/O-Bus segments;
FIG 2 an I/O-Bus technology with detached I/O-islands and I/O-Bus segments, daisy chain topology in a first variant;
FIG 3 an I/O-Bus technology similar to FIG 2 in a second variant;
FIG 4 an I/O-Bus technology with detached I/O-islands and multiple I/O-Bus segments, tree topology;
FIG 5 an I/O-Bus technology with detached I/O-islands and multiple I/O-Bus segments, star topology;
FIG 6 a list of engineered I/O-Modules with a pregiven segment topology and
FIG 7 a list of discovered I/O-Modules with the topology "fingerprint" after position measurement.

The following examples represent embodiments of the present invention.

Addressing and commissioning of detached I/O-Modules of a Building Automation System connected by a Single Pair Ethernet (SPE) datalink can take place in the following environment:
- the Building Automation System comprises a Building Automation Controller;
- the Building Automation System comprises a first group of I/O-Module-devices being connected by a first Single Pair Ethernet datalink directly to the Building Automation Controller and to a first branchbconnectionmodule (BC-Module).
- respective further detached 1..n groups of 1..m I/O-Module-devices being connected in each case by a respective further Single Pair Ethernet datalink,
- I/O-Module-devices comprise
   ∘ a respective I/O-Module-Address, which is assigned during commissioning.
   ∘ a respective node ID or serial number SN, e.g. MAC address, which is factory defined.
   ∘ a respective I/O-Module Type, which is factory defined.
   o a respective Module Position, which is determined or measured by the Building Automation Controller or further BC-Module during commissioning.
- the respective further detached groups of I/O-Module-devices and the respective Single Pair Ethernet datalink have in each case a respective BC-Module which comprises:
   o a respective serial number SN, e.g. MAC address, which is factory defined and imprinted, e.g. via a QR Code
   o a respective BC-Module Type, which is factory defined
- the respective BC-Modules are connected to the first BC-Module or to a BC-Module of one of the respective further Single Pair Ethernet datalinks
- the first BC-Module and the further BC-Modules are inter-connected by suitable IP data link connection (e.g. 100BASE-TX, 10BASE-T1L, WIFI);
- the Building Automation Controller and the further BC-Modules are in each case configured as line coordinators for their assigned respective Single Pair Ethernet datalink;
- the further BC-Module requires a logical I/O-Bus Segment Number L
- the further BC-Module with the role of the line coordinator has a reserved logical Module-Address, e.g. L.0
- the logical I/O-Bus Segment Number L of the further BC-Module with the role of the line coordinator should be configured at commissioning time.

The configuration of the logical I/O-Bus Segment Number L is usually done by the Building Automation Controller during the assignment of the discovered physical BC-Module to the engineered representation of the BC-Module. The BC-Module assignment can be based on pre-engineered serial number information, e.g. printed on the BC-Module (e.g. QR-Code). The serial number can be collected during BC-Module installation and transferred together which the recorded I/O-Bus Segment Number L of the Single Pair Ethernet datalink to the engineering tool. If discovered serial number of the physical BC-Module matches with pre-engineered serial number and I/O-Bus Segment Number L, the BC-Module will be assigned and the logical I/O-Bus Segment Number L is configured accordingly. This solution requires extra work for the installer to collect serial number information during installation time and to transfer this information to the engineering tool.

Alternatively the BC-Module can be manually assigned at commissioning time to the engineered logical BC-Module representation (containing the pre-engineered I/O-Bus Segment Number L) via a commissioning tool by selecting the engineered BC-Module via the commissioning tool and, e.g., pushing a button on the physical BC-Module. Pushing a button on the BC-Module will trigger a specific identification message to initiate the assignment of the physical BC-Module to the engineered BC-Module and to configure the logical I/O-Bus Segment Number L accordingly. This solution requires a commissioning tool and extra user interaction by the commissioning engineer.

The configuration of the logical I/O-Bus Segment Number L to the respective physical BC-Module can also be done during commissioning via other means, e.g.
o by a commissioning tool (e.g. ABT Go, ABT site)
o by a local user (display, push buttons) interface of the respective BC-Module
o by a web server of the respective BC-Module
and the Building Automation Controller discovers the physical BC-Module with its configured I/O-Bus Segment Number L and assigns the physical BC-Module to the respective matching engineered representation of the BC-Module based on pre-engineered I/O-Bus Segment Number L information. This solution requires extra work for the installer and may add extra costs to the hardware of the BC-Module (local user interface, higher microcontroller costs for webserver implementation).

The present intention is an automatic configuration of the logical I/O-Bus Segment Number L of the further BC-Module and the automatic assignment of the further BC-Module to the respective engineered representation of the BC-Module by the Controller based on an engineered and discovered topology and other characteristics of the group of I/O-Module-devices being connected to the BC-Module by a respective further Single Pair Ethernet datalink.

The inventive idea is based on the fact that a configuration of I/O-Bus Segment Number L information to the discovered physical BC-Module and I/O-Modules by the Building Automation Controller can be fully automated in many cases based of pregiven, pre-engineered and discovered topology "fingerprint" information of the I/O-Bus Segment.

In a specific embodiment the topology of the of the I/O-Bus Segment is characterized by
- the total number of I/O-Modules and BC-Modules which are connected to the I/O-Bus Segment and the respective Single Pair Ethernet datalink
- the I/O-Module Type of I/O-Modules and BC-Module Type of BC-Modules which are connected to the I/O-Bus Segment and the respective Single Pair Ethernet datalink
- the Module Position of I/O-Modules and BC-Modules on the I/O-Bus Segment and the respective Single Pair Ethernet datalink
- and optionally the cable length of the I/O-Bus Segment and the respective the Single Pair Ethernet datalink

The BC-Module with the role of the line coordinator, for example, determines during commissioning the Position and Type of installed physical Modules on the Single Pair Ethernet datalink and optionally the cable length the Single Pair Ethernet datalink and provides this topology information of the I/O-Bus Segment to the Building Automation Controller.

The Building Automation Controller compares the pregiven, engineered topology of the I/O-Bus Segment L with the discovered topology (i.e. the engineered sequence of Modules with their Module Type and optionally the cable length). If engineered and discovered topology of an I/O-Bus Segment match, the I/O-Bus Segment Number L is defined and can be configured automatically to the respective physical BC-Module which has the role of the I/O-Bus Segment and Single Pair Ethernet line coordinator.

The probability that all I/O-Bus Segments which are connected to a Building Automation Controller have a different topology "fingerprint" is very high and the automatic configuration of I/O-Bus Segment Number L will work in most cases.

If multiple I/O-Bus Segments which are connected to a Building Automation Controller have an identical topology "fingerprint" the automatic assignment is ambiguous and above alternative, manual commissioning procedures are applicable.

All discovered Modules can be visualized on the Building Automation Controller or in a tool with its position in the corresponding I/O-Bus Segment and with the I/O-Module-Type, MAC Address, Serial-Number, ...., etc. and the assigned Module-Address L.N

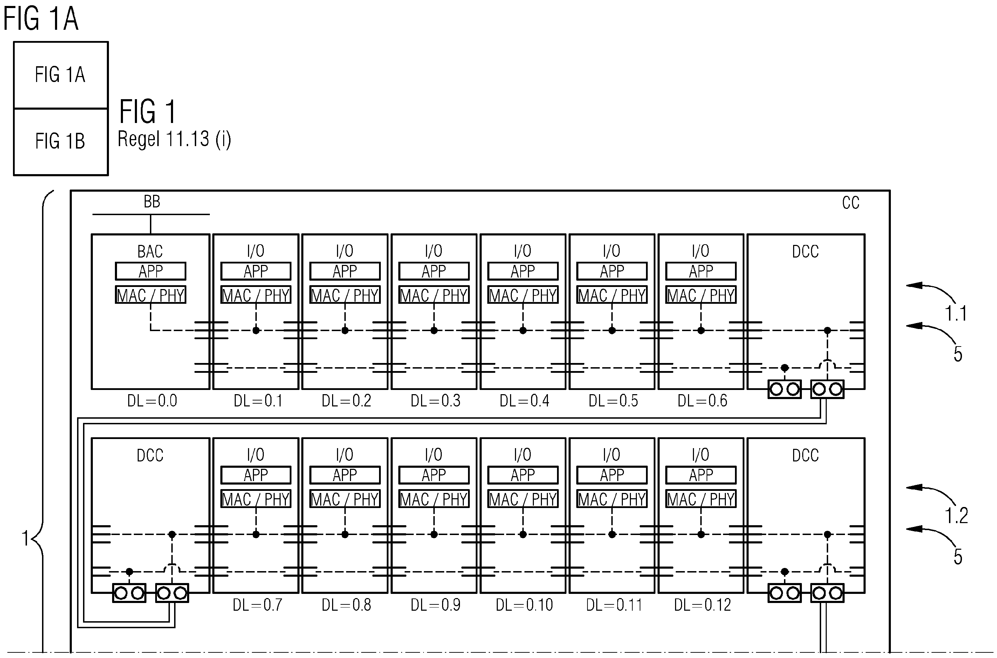

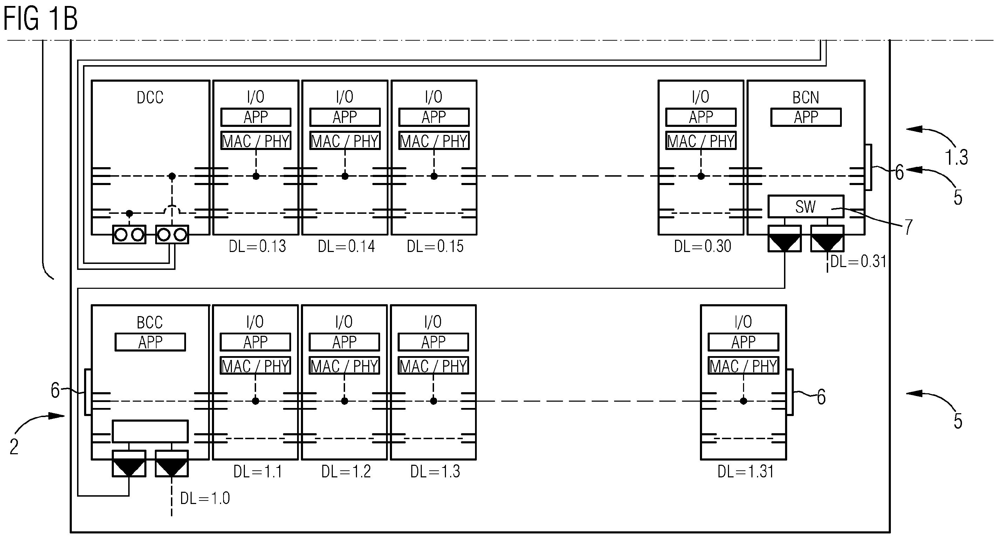

FIG 1 shows a specific embodiment of a control cabinet CC comprising a plurality of I/O-Modules IO. The I/O-Modules IO are arranged in two I/O-Bus segments 1, 2 in this example. The segments are typically mounted on rails within the control cabinet. The first segment 1 comprises three sections 1.1 to 1.3. The first section 1.1. includes a Building Automation Controller BAC in series with e.g. six I/O-Modules I/O and a daisy chain connector module DCC at the end of the line. The Building Automation Controller BAC may be connected to a backbone BB. Each of the Building Automation Controller BAC and the I/O-Modules may comprise an application APP as well as a hardware interface or physical layer MAC/PHY. The Building Automation Controller BAC, the I/O-Modules of the first section 1.1 and the daisy chain connector module DCC are connected by an I/O-Bus 5 in a multidrop line topology (e.g. 10BASE-T1S). Logical addresses DL = 0.0 to DL = 0.6 are assigned to the Building Automation Controller BAC and the six I/O-Modules in the first section 1.1.

The second section 1.2 of I/O-Modules I/O of the first segment 1 may be mounted on a second rail. In this example, the second section 1.2 comprises from left to right a DCC module (daisy chain connector module), six I/O-Modules I/O and a further DCC module at the right end. The modules of this second section 1.2 are also connected by an I/O-Bus 5. The I/O-Modules of this second segment 2 have the logical addresses DL = 0.7 to DL = 0.12. The DCC module at the right end of the first section 1.1 is connected to the DCC module at the left end of the second section 1.2 via an I/O-Bus according to the 10BASE-T1S specification, for example.

The serial I/O-Bus 5 within each segment 1, 2 and/or section 1.1 to 1.3 may be realized as pluggable inter-module connection according to the 10BASE-T1S specification with a 24V power supply.

The third section 1.3 of the first segment 1 can be structured similar to the second section 1.2. However, at the right end of the linear section 1.3 there is provided a branch connection module BCN terminating the I/O-Bus 5 which may be limited to 31 nodes (one BAC and 30 I/O-Modules). The residual I/O-Modules of the I/O-Bus 5 are symbolized in the third section 1.3 with the logical addresses DL = 0.13 to DL = 0.30. The I/O-Bus 5 of the sections 1.1 to 1.3 is terminated by a line termination 6.

The branch connection module BCN may be realized as 10BASE-T1S Line PLCA Node.

The branch connection module BCN with the logical address DL = 0.31 comprises a switch 7 for connecting a fast Ethernet connection, e.g. according to the 100BASE-Tx specification. The switch 7 may also be connected to one or more further fast Ethernet busses 100BASE-Tx.

A second segment 2 of I/O-Modules within the housing of the control cabinet CC starts with a branch connection module BCC followed by a plurality of I/O-Modules (e.g. maximum 31 modules). The branch connection module BCC may be realized as 10BASE-T1S Line PLCA Coordinator.

The branch connection module BCC may also comprise a switch 7 having a port for connection with the branch connection module BCN of the first segment via the I/O-Bus 100BASE-Tx, for example. The BCC may have the logical address DL = 1.0, whereas the following I/O-Modules have the logical addresses DL = 1.1 to 1.31. The modules of the second segment 2 are also interconnected serially by a separate segment of the I/O-Bus 5. This I/O-Bus segment is terminated at both ends with a line termination 6.

The Bus Automation Controller may have a dedicated I/O-Bus connector (10BASE-T1S port and internal line termination). It discovers and manages all I/O-Modules of the I/O-subsystem. Furthermore, it integrates input and output channels of the I/O-Modules.

The I/O-Modules each may have an integrated 10BASE-T1S connector and a 24V power connector on both sides of the I/O-Module. A line termination may be provided on the last I/O-Module. The I/O-Modules may provide multiple input and output channels.

The daisy chain connector module DCC may physically connect 10BASE-T1S and power supply wires with the I/O-Modules. It may comprise an integrated 10BASE-T1S connector on both sides of the DCC module and additional screw terminals for the line break.

The Branch connection module BCC or BCN may be realized as 10BASE-T1S/100BASE-Tx IP multiport network switch that connects detached I/O-Modules on a separate 10BASE-T1S line with the 10BASE-T1S line of the controller. Typically, the BC-Module supports exactly one 10BASE-T1S connection. Optionally, the BC-Module may support at least one 100Base-Tx port to connect the next BC-Module(s). The BC-Module may also support one additional 100BASE-T1x port to connect a commissioning tool.

The combination of BCC or BCN modules in the CC could be replaced in an optimized way by a single device, a 10BASE-T1S repeater which includes two 10BASE-T1S connections and a network switch, acting on one 10BASE-T1S connection as PLCA Node and on the other 10BASE-T1S connection as PLCA Coordinator.

The logical I/O-Module address DL may be used by the Building Automation Controller BAC to address the I/O-Modules and BC-Modules logically in the engineering and runtime system independent of IPv6 addresses which may change at runtime. In the runtime system DL is mapped by the firmware of the controller to the respective IPv6 address of the module. The address format is DL = L.ID. The variable L is the logical I/O-Bus segment number 0 ... n of the corresponding physical 10BASE-T1S line. ID indicates the module position in the respective I/O-Bus segment. ID also defines the PLCA node-ID = 0 ... n to implement the 10BASE-T1S Physical Layer Collision Avoidance Mechanism. The logical address DL further identifies the engineered representation of the I/O-Module and BC-Module by the controller. Furthermore, DL of the physical I/O-Module is automatically configured by the controller during commissioning. The I/O-Module assignment is performed based on the discovered network topology and position of the I/O-Module which must match with the engineered module-address L.N. An alternative solution would be an automatic I/O-Module assignment based on pre-engineered serial-number of the I/O-Module or a manual device assignment of the physical module to the engineered representation of the module in the controller using a commissioning tool.

The Building Automation Controller BAC may have the logical I/O-Bus segment number L = 0 (reserved for the 10BASE line which is directly connected to the controller). Further, the Building Automation Controller BAC typically has the position number ID = 0 (controller is the first node on the 10BASE-T1S line and the PLCA Coordinator).

In the runtime system the branch connection module can be the 10BASE-T1S line PLCA Coordinator BCC or a 10BASE-T1S line PLCA Node BCN. The branch connection module has segment number L = 0 on line 0 (i.e. first segment 1 in FIG 1) which is directly connected to the controller BAC. The segment number of the branch connection module may be L = 1 ... n in detached I/O-islands. The position number of branch connection module may be ID = 0 representing the first module on the detached 10BASE-T1S line of the PLCA coordinator. The position number may be ID = 1 ... m which indicates a PLCA node on the 10BASE-T1S line L to make the connection to the next line.

The above explanations relating to the I/O-Bus network components and the logical I/O-Bus module addressing also apply to the following embodiments.

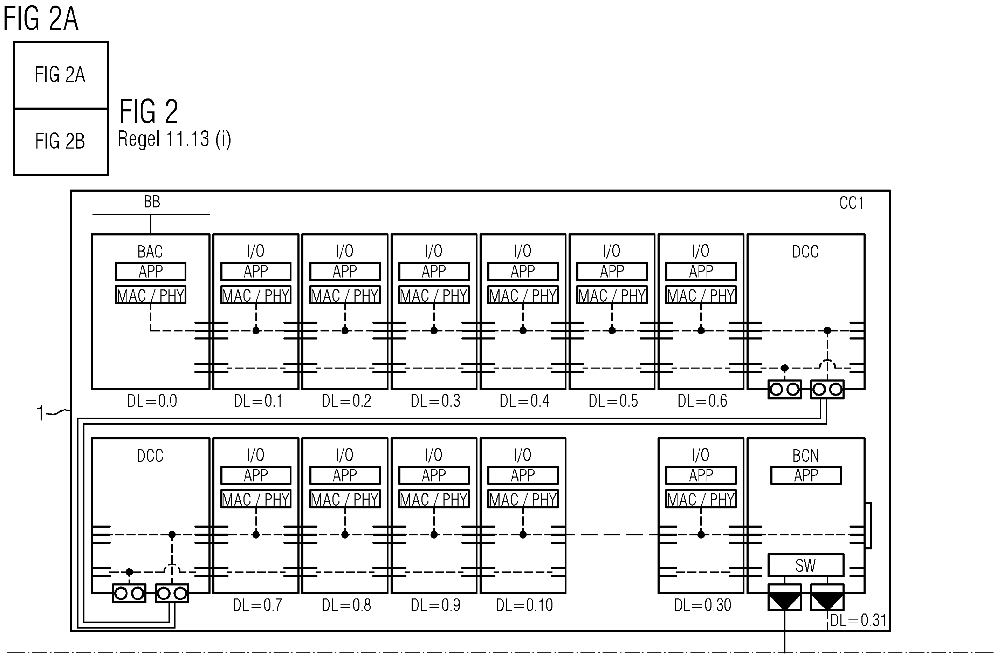

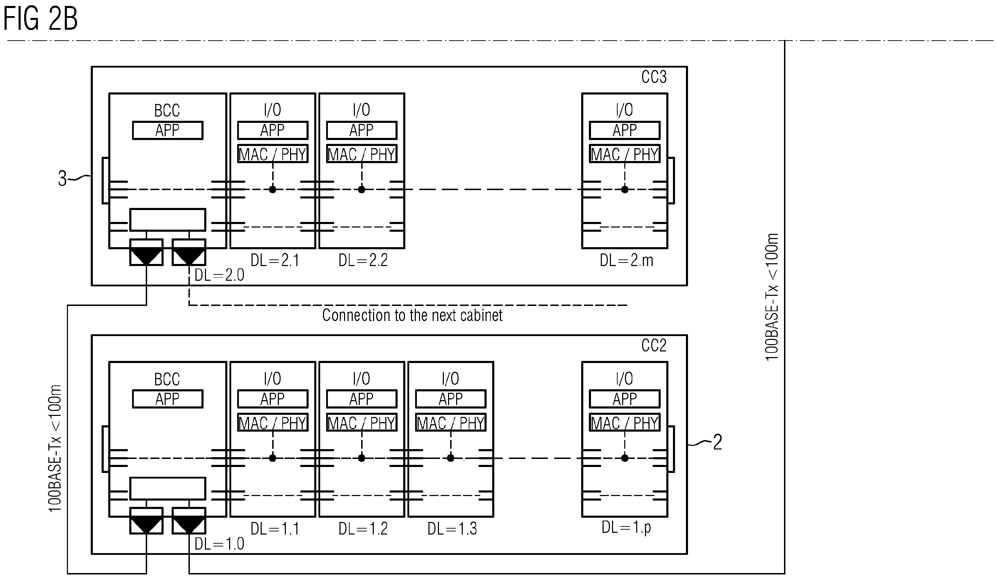

FIG 2 illustrates another I/O-Bus topology with detached I/O-Bus islands and multiple I/O-Bus segments in a daisy chain topology in a first variant. The topology comprises three control cabinets CC1, CC2 and CC3. They are separated from each other physically. In this embodiment, only the first segment of I/O-Modules is housed in the first control cabinet CC1. The second segment 2 is housed in the second control cabinet CC2, and the third segment 3 is housed in the third control cabinet CC3. While the first I/O-Bus segment 1 is terminated by a branch connection module BCN, the second segment 2 and the third segment 3 are started with a respective branch connection module BCC. The BCN of the first segment 1 is connected to the BCC of the second segment 2 via a 100BASE-Tx bus, for example. Similarly, the BCC of the second segment 2 may be connected to the BCC of the third segment 3 via a 100BASE-Tx I/O bus. The 100BASE-Tx I/O-Busses should be shorter than 100 m. The BCC of the third control cabinet CC3 may be connected to one or more further control cabinets.

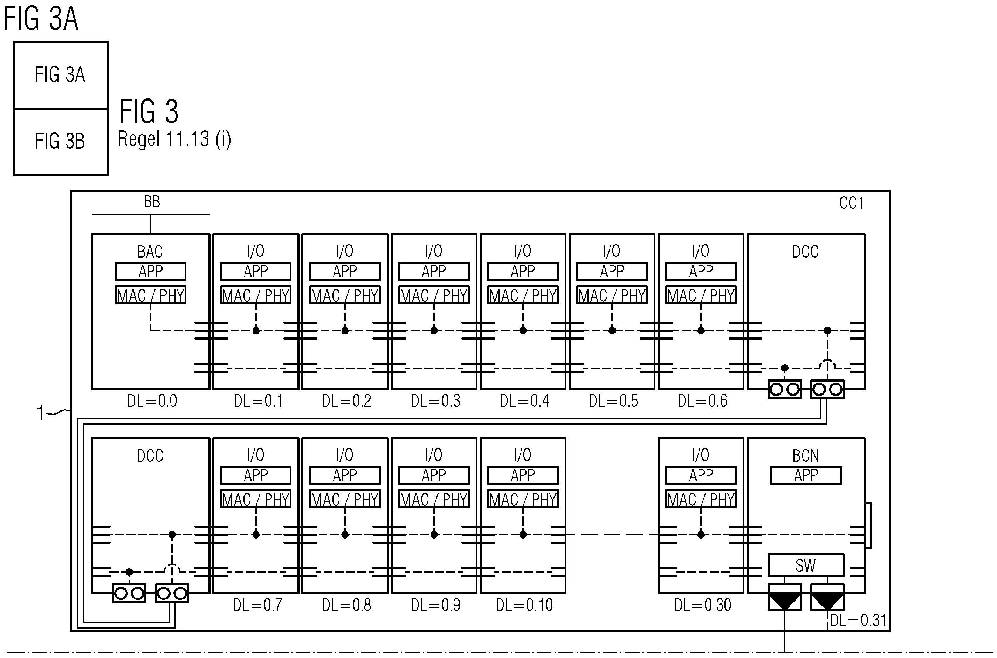

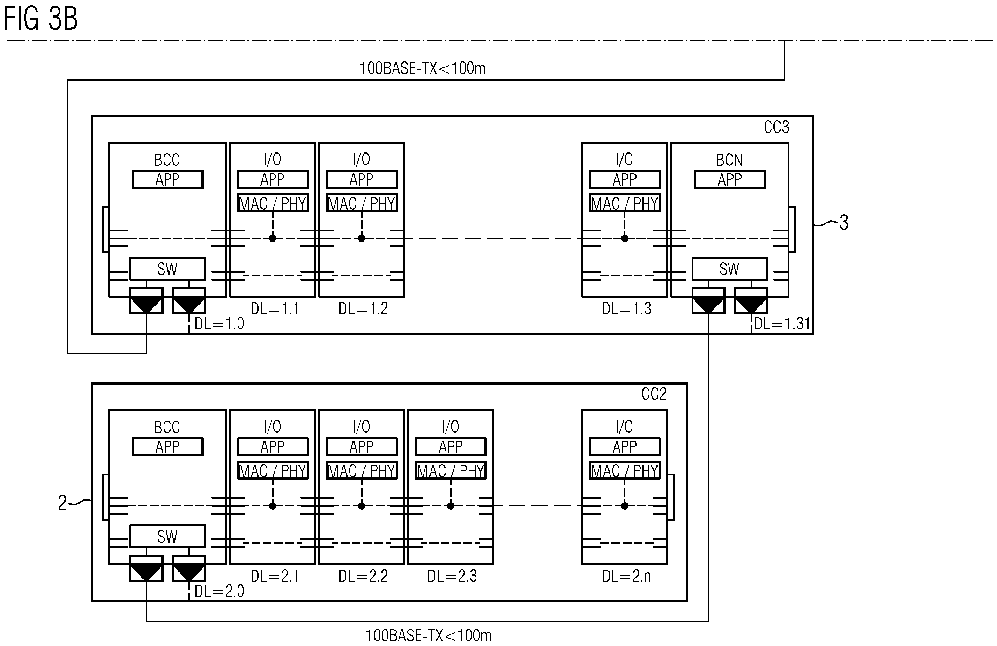

FIG 3 shows another variant of the I/O-Bus topology of FIG 2. The first segment 1 of the first control cabinet CC1 and the second segment 2 of the second control cabinet CC2 are unchanged. However, a further branch connection module BCN is provided at the right end of segment 3. BCN of the first control cabinet CC1 is connected to BCC of the third control cabinet CC3 via e.g. a 100BASE-Tx bus. Similarly, BCN of the third control cabinet CC3 is connected to BCC of the second control cabinet CC2 via e.g. a 100BASE-Tx bus.

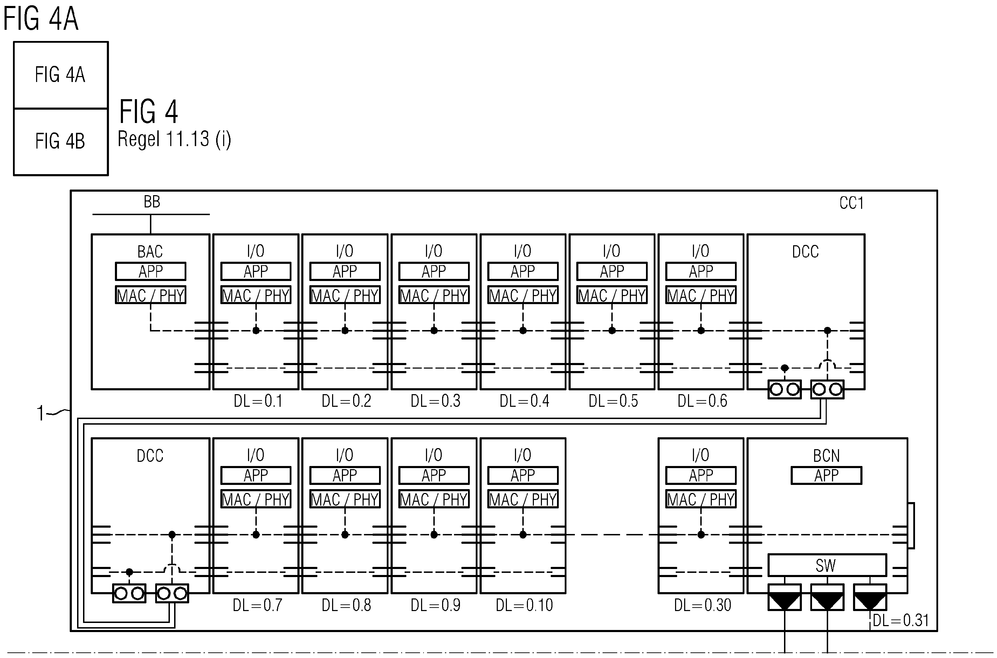

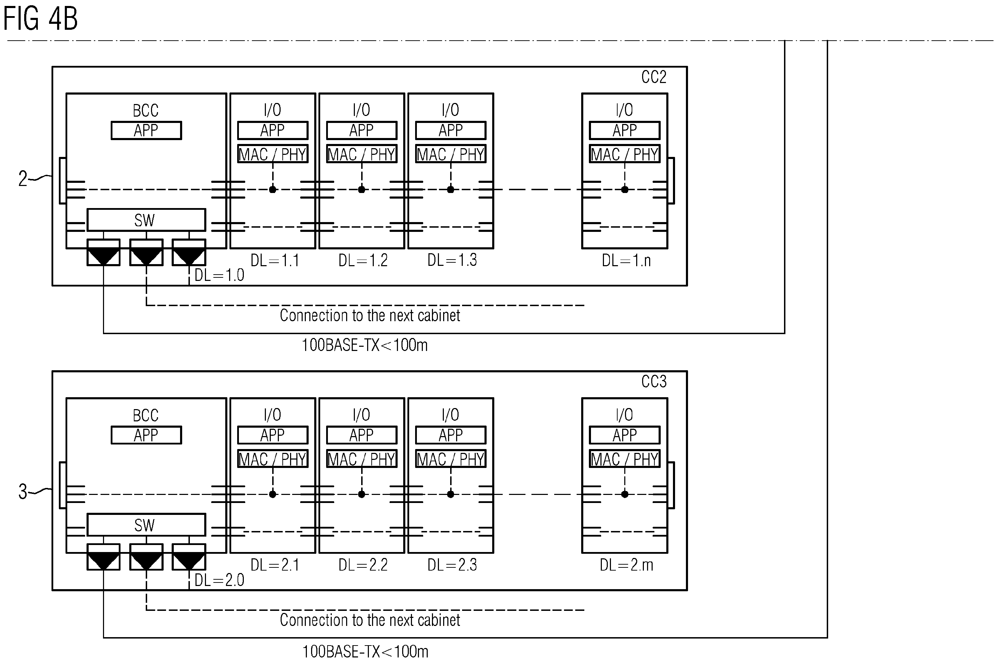

FIG 4 shows an I/O-Bus topology realized as tree topology. The structure of the control cabinets CC1 to CC3 is nearly identical to the structure of the control cabinets of FIG 2. The number of ports of the switches of the branch connection modules may be different. According to the embodiment of FIG 4, the BCN of the first control cabinet CC1 is connected to the BCC of the second control cabinet CC2 as well as to the BCC of the third control cabinet CC3. Further control cabinets may be connected to the BCCs of the second and third control cabinet CC2 and CC3.

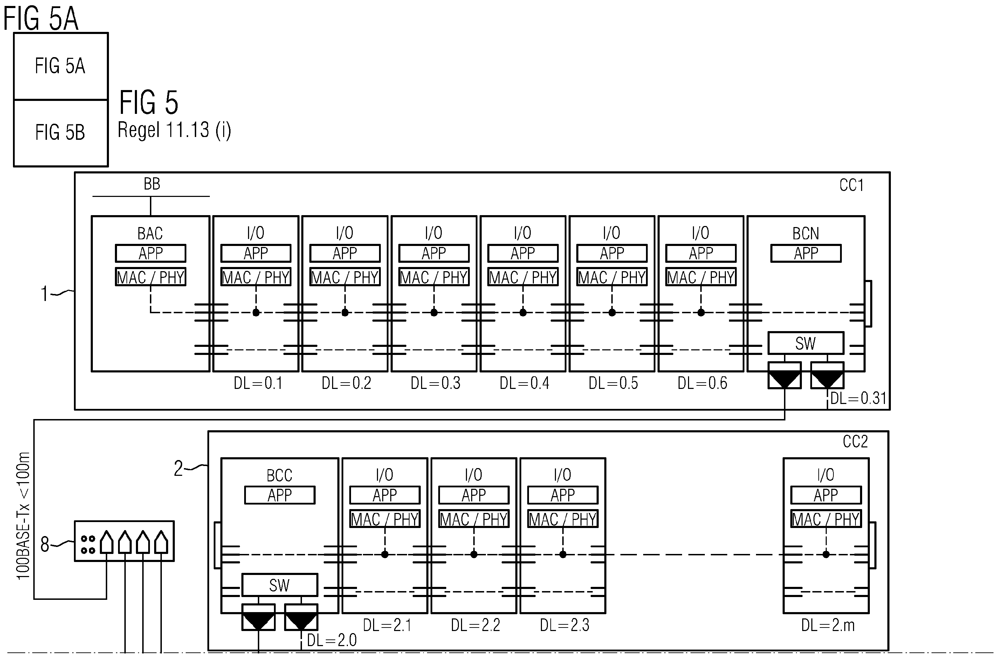

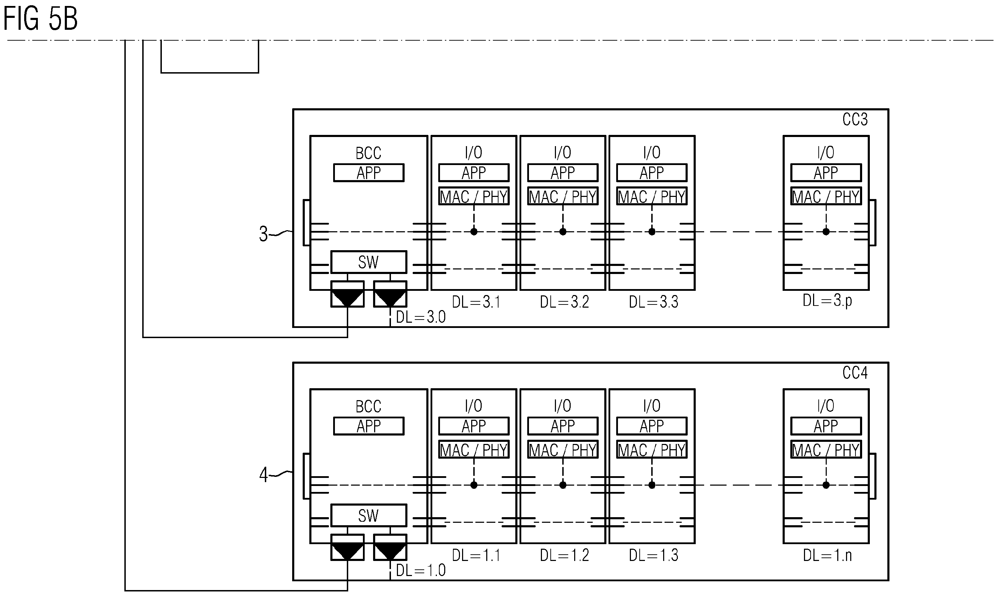

FIG 5 shows an I/O-Bus star topology. The topology comprises four control cabinets CC1 to CC4. Each of the control cabinets CC1 to CC4 houses a respective segment 1 to 4. Each of the segments 2 to 4 start with a BCC while the first segment 1 ends with a BCN. All branch connection modules BCC and BCN are connected to one network switch 8 via a 100BASE-Tx I/O-Bus, for instance. Thus, the segments are switched together in a star topology.

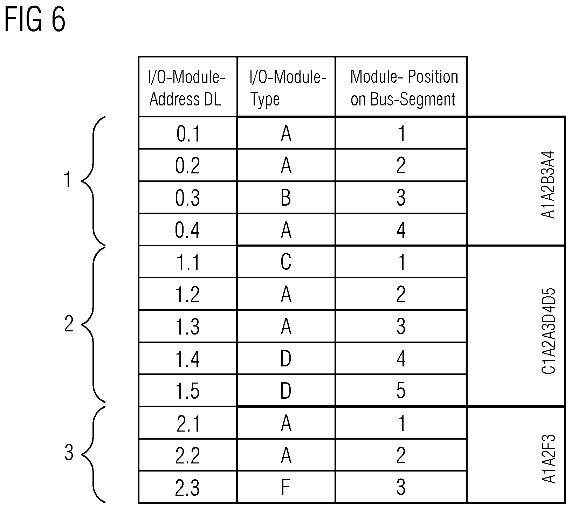

FIG 6 shows an example of a list of engineered I/O-Modules with a pregiven topology. The list comprises I/O-Modules in three segments 1, 2 and 3. Correspondingly, the addresses DL start with 0, 1 or 2. The addresses are completed with the respective module position of the module in its respective I/O-Bus segment. Furthermore, the list comprises module types, here symbolized by letters A to D and F. The right column of the list shows the engineered fingerprints of the I/O-Bus segments. Accordingly, segment 1 has the fingerprint A1A2B3A4, the second segment 2 has the fingerprint C1A2A3D4D5, and the third segment 3 has the fingerprint A1A2F3.

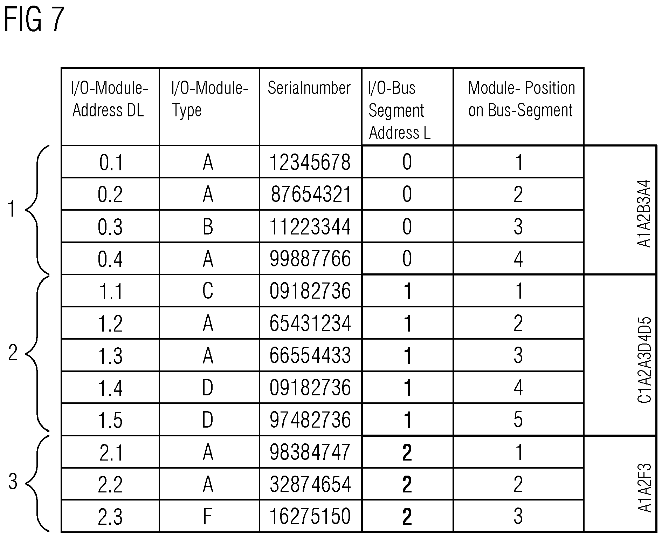

FIG 7 shows a list of discovered I/O-Modules after position measurement. The I/O-Bus segment number L in the detached I/O-Bus segments is undefined first. The information of the discovery includes the module-position on each bus segment and the I/O-Module types. Furthermore, the discovery also includes the fingerprints listed in the right column of the list. Additionally, the controller which may perform the discovery knows the I/O-Modules of its own segment, i.e. segment 1. Thus, a segment address "0" is assigned to these modules, but the segment addresses of the further I/O-Bus segments and their I/O-Modules is undefined.

For obtaining the segment addresses of the remaining modules, the Building Automation Controller BAC compares the fingerprints of the engineered data (compare FIG 6) with the fingerprints of the discovered topology (compare FIG 7). Since the fingerprints of the second and third segments 2 and 3 correspond to the fingerprints of the engineered list, the segment addresses of the engineered list can be assigned to the respective segments. In the case of FIG 7, the second segment 2 obtains the segment address "1" and the third segment obtains the segment address "2".

Independent of the real topology of the I/O-Bus (compare Figs. 1 to 5) each segment of the topology can be engineered and discovered according to the example of the Figs. 6 and 7.

The above embodiments show that automatic addressing and commissioning can be enhanced with a mechanism which allows the automatic configuration of I/O-Bus segment address L to the discovered physical BC-Module and I/O-Modules by the Building Automation Controller BAC.

This plug & play approach simplifies the commissioning of detached I/O-Modules and the respective I/O-Bus Segments and BC-Modules of a Building Automation System using a Single Pair Ethernet (SPE) datalink. The procedure saves manual commissioning work and reduces project costs.

### List of Reference

- 1 to 4: segments
- 1.1 to 1.3: sections
- 5: serial bus
- 6: line termination
- 7: switch
- 8: switch
- APP: application
- BAC: Building Automation Controller
- BB: backbone
- BCN, BCC: branch connection module
- CC: control cabinet
- CC1 to CC4: control cabinet
- DL: logical address
- I/O: I/O-Module

## Claims

1. Method of automatically addressing a plurality of I/O-Modules (I/O) of an I/O-Module arrangement being connected to a controller (BAC), the I/O-Modules (I/O) being arranged serially in a first I/O-Bus segment (1) and a separate second I/O-Bus segment (2) , each I/O-Bus segment including a branch connection unit (BCC, BCN) and at least one of the I/O-Modules (I/O), the branch connection units (BCC, BCN) of the first and second I/O-Bus segments (1, 2) are interconnected, the method includes the steps of:
- providing pregiven topology data of the I/O-Module arrangement,
- the pregiven topology data includes for each I/O-Bus segment: a segment address and respective segment topology data, wherein the segment topology data includes an address of the controller or the respective branch connection unit and each I/O-Module (I/O) of the respective I/O-Bus segment (1, 2),
- automatically discovering physical segment topology data by the controller (BAC) in the first I/O-Bus segment (1) and by the respective branch connection module (BCC) in the second I/O-Bus segment (2), and
- automatically addressing all I/O-Modules (I/O) with the respective segment address in accordance with the pregiven topology data, only if the physical segment topology data of each I/O-Bus segment (1, 2) corresponds to the respective segment topology data of the pregiven topology data.

2. Method according to claim 1, wherein the segment topology data includes specifically for each of the I/O-Modules (I/O) within the respective I/O-Bus segment: a module address and a type information, wherein each module address represents a position of the corresponding module within the respective I/O-Bus segment.

3. Method according to claim 1 or 2, wherein the segment topology data as well as the pregiven topology data include distances of the I/O-Modules (I/O) to the respective branch connection unit, and the step of automatically determining the physical segment topology data includes that the respective branch connection unit automatically measures the distances.

4. Method according to claim 3, wherein the step of automatically measuring the distance includes a measurement of a response time to a signal.

5. Method according to one of the preceding claims, wherein the step of automatically addressing includes automatically addressing of the respective branch connection unit (BCC, BCN) of the second I/O-Bus segment (2).

6. Method according to one of the preceding claims, wherein the pregiven segment topology data as well as the physical segment topology data include type information about each of the I/O-Modules (I/O), and the step of automatically determining the physical segment topology data includes that the respective branch connection unit (BCC) automatically determines the type information of each I/O-Module in the respective I/O-Bus segment.

7. Method according to one of the preceding claims, wherein the pregiven segment topology data as well as the physical segment topology data include type information about the respective branch connection module (BCC, BCN).

8. Network including a plurality of I/O-Modules (I/O) of an I/O-Module arrangement being connected to a controller (BAC), the I/O-Modules (I/O) being arranged serially in a first I/O-Bus segment (1) and a separate second I/O-Bus segment (2), each I/O-Bus segment including a branch connection unit (BCC, BCN) and at least one of the I/O-Modules (I/O), the branch connection units (BCC, BCN) of the first and second I/O-Bus segments are interconnected, wherein the controller (BAC) is designed to perform the method of one of the claims 1 to 7.

9. Network according to claim 8 being designed as Multidrop network.

10. Network according to claim 8 or 9, wherein each I/O-Bus segment (1, 2) comprises an I/O-Bus (5) on the basis of a Single Pair Ethernet datalink.

11. Network according to claim 10, wherein the I/O-Bus (5) is based on 10BASE-T1S technology.

12. Network according to one of the claims 8 to 11, wherein the branch connection units (BCC, BCN) of the first and second I/O-Bus segments (1, 2) are connected via an Ethernet link according to the 100Base-Tx specification.

13. Control cabinet housing a plurality of I/O-Modules (I/O) and a controller (BAC) designed to perform the method of one of the claims 1 to 7.

14. Building Automation System comprising at least one network according to one of the claims 8 to 11.

15. Building Automation System according to claim 14, wherein the I/O-Module arrangement is visualized on the basis of the automatically discovered physical segment topology data and the automatically addressed branch connection units (BCC, BCN).
